# EUROPEAN PATENT SPECIFICATION

(11) **EP 3 833 570 B1**
(45) Date of publication and mention of the grant of the patent: **02.02.2022**
(21) Application number: 19880928.7
(22) Date of filing: 20.12.2019
(51) Int. Cl.: B60P 1/16, B60P 1/26, B60R 19/56

(54) **MULTIFUNCTIONAL CONTROL SYSTEM FOR USE IN A TIPPER VEHICLE**
MULTIFUNKTIONELLES STEUERUNGSSYSTEM ZUR VERWENDUNG IN EINEM KIPPFAHRZEUG
SYSTÈME DE COMMANDE MULTIFONCTION DESTINÉ À ÊTRE UTILISÉ DANS UN VÉHICULE À BENNE BASCULANTE

(30) Priority: 21.12.2018 IT 201800020512
(43) Date of publication of application: 16.06.2021
(73) Proprietor: Italauto Car - Societa' A Responsabilita' Limitata, 41015 Nonantola (MO) (IT)
(72) Inventor: MESCHIARI, Andrea, 41015 Nonantola (MO) (IT)
(74) Representative: Maroscia, Antonio
(86) International application number: PCT/IB2019/061159
(87) International publication number: WO 2020/128986

(56) References cited:
- WO-A2-2018/055565
- GB-A- 2 548 347

## Description

### Technical field

The present invention finds application in the field of transport vehicles and particularly relates to a control system for a tipper body of a transport vehicle.

The invention also relates to the method of operation and use of the aforementioned system.

### Background art

Tipper vehicles are known to generally have a support frame, a subframe removably mounted to the frame with at least one front cross member and a rear cross member, and a fluid-dynamic cylinder for lifting the tipper body.

The latter is connected to the subframe by means of support means substantially at the four corners of the body, to be tipped on both sides and also about the rear edge.

Each support location has two mutually engageable support and lock members, namely a convex member which is fixed to the frame and extends in cantilever fashion thereby forming a spherical head supported by a shank, and a substantially inverted cup-shaped concave member, which is fixed to the bottom surface of the floor of the body and is designed to accommodate the spherical head by receiving it therein for complete support.

In order to ensure a proper body-tipping operation, each support means comprises a pin for selectively locking each convex member with respect to a corresponding concave member and prevent separation thereof. The two-way actuation of each pin is ensured by a double-acting actuator, of pneumatic, electric, oil-hydraulic or electro-hydraulic type.

Both the spherical head and the inverted-cup seat have respective through holes, which are mutually aligned when the body is in its normal horizontal position, and receive locking pins.

When the body has to be tipped to tipper the payload on one side or at the rear end of the vehicle, the driver actuates the pin actuators on the side opposite to the tipping side and the body-lifting cylinder toward the selected side.

In this step, care must be taken for the pins to be fail-safely inserted and the hooks to be released from the walls on the same selected side of the body to prevent any risk of tippering the payload on the wrong side, and also causing safety hazards for the operators that may be unaware of a pin selection error and stand near the side of the body on which the payload will be tippered.

If the body has walls, these must be able to be opened on the tippering side, otherwise the payload would be displaced, during tipping, and progressively build up against the walls that have been wrongly left closed, thereby applying an increasing thrust thereupon, and possibly cause failure.

The international application WO2018/055565 discloses a system for controlled tipping of a tipper body of a truck which comprises an electronic control unit and a plurality of position sensors.

In this known system the electrical connections between the control unit and the pin actuators and the cylinder are integrally arranged on the subframe. The control unit is also provided with an operator interface which consists of a terminal connected to the sensors and configured to allow the actuation of the lift cylinder, only when two of the pins are in the locked position, according to the tipping side.

One drawback of this known system consists in that the operator is not allowed to monitor the operating conditions of the various actuators and hence confirm proper operation of the system.

A further drawback is that the operator is not informed of any hazard situations caused by failed engagement of the pins, of the fully lowered position of the body, and of the operating position of the underrun protection bar.

Also, in case of failure of any actuator, the operator is not aware of the nature of the fault, and can only stop the automatic operation of the system and switch to manual operation, and eventually ask the bodybuilder to repair the failure or solve the problem.

### Technical problem

In view of the prior art, the technical problem addressed by the present invention is to control and monitor the operation of the various components of the system that are designed to cause the tipper body to be tipped under safe conditions and in compliance with relevant national and international standards.

### Disclosure of the invention

The object of the present invention is to obviate the above drawback, by providing a system and a method for controlled and automatic tipping of a tipper body of a transport vehicle under safe conditions.

A further object of the present invention is to provide a system as described above that can ensure that safety of the operator or persons in the surrounding areas is unaffected.

Another object of the present invention is to provide a system as described above that is very simple and easy to operate.

Yet another object of the present invention is to provide a system as described above that ensures safe operating conditions of the body even when the vehicle moves.

These and other objects, as more clearly explained hereinafter, are fulfilled by a multifunctional control system as defined in claim 1 for use with a transport vehicle of the type comprising a frame, a subframe, a tipper body with a plurality of walls and connected to the subframe by means of a plurality of spherical supports that are adapted to be selectively locked by pins, a lift cylinder for lifting the body, an emergency brake, a power takeoff and a movable underrun protection bar.

According to the invention, the multifunctional control system comprises a plurality of first, second, third and fourth sensors respectively, for detecting the position of the walls, the position of the pins, the position of the cylinder, the operation of the brake, the engagement of the power takeoff and the position of the underrun protection bar. Furthermore, the system comprises a central control unit with the sensors operably connected thereto and a control terminal connected to the control unit, and adapted to be operated by operators.

According to the invention, the control terminal is an electronic device of table type having a touch-operated graphical interface, which is configured to select the tasks of opening the walls, tipping the body and positioning the underrun protection bar only when the power takeoff is engaged.

Furthermore, the system comprises a speed limiter and/or an acoustic or visual alert device, which are configured to be automatically operated to reduce the rotation speed of the engine and/or warn the operator about anomalies and hazard conditions if the body remains in the lifted state and at least one wall remains in the open position.

With this configuration, the system can control the tipping movement of the tipper body under safe and protected conditions for the operator and the persons in the surrounding areas, while ensuring a very simple and easy operation.

In another aspect of the invention, the electronic device is connected to the control unit via a cable or wireless communication means for the control terminal to report proper or wrong operation of the cylinder and actuators, position of the body, automatic or manual triggering of the speed limiter and the acoustic and/or visual alert devices, and for the system to be stopped under emergency and hazard conditions.

In a preferred embodiment, the system comprises first and second actuators for actuating the walls and the locking pins and respective first and second sensors also connected to the control unit. In this case the control terminal is configured to control the first and second actuators and detect the signals of the first and second sensors via the graphical interface.

In a further embodiment, the system comprises third actuators and respective third sensors connected to the central control unit for driving the lift cylinder, detecting the operation of the emergency brake and detecting the engagement of the power takeoff.

Also, the control terminal is configured to move the underrun protection bar between a lowered "driving" position, and a raised "field" position, by means of at least one fourth actuator and its respective fourth sensor.

Conveniently, the central control unit is configured to control the actuation of the lift cylinder, only with the underrun protection bar is in the "field" position, with the power takeoff engaged.

The control terminal may be configured to lock the operation of the system and report an emergency condition for the walls, the cylinder, the bar and the power takeoff.

In a further aspect of the invention, the control unit is configured to use an appropriate software and a control terminal to report additional functions of apparatus and accessories of the vehicle, such as a sunroof of the tipper body, a control camera, a swiveling headlight, cereal outlets, an electric warning triangle and a balance meter.

The main advantages provided by the multifunctional system of the invention are as follows:
- all the devices are incorporated in a single control unit,
- the operator can manage the devices with improved safety,
- the efficiency of the installed devices is easily checked,
- the control unit may be switched off in case of failure and manual management of the devices,
- the system may be installed on any vehicle model, the system is easily installed as a retrofit kit.

In further aspect, the invention provides a method of multifunctional control of a tipper vehicle as defined in claim 9.

Advantageous embodiments of the invention are obtained in accordance with the dependent claims.

### Brief description of the drawings

Further features and advantages of the invention will be more apparent from the detailed description of a preferred, non-exclusive embodiment of a system and a method for controlled tipping of a tipper body of a vehicle, which is described as a non-limiting example with the help of the annexed drawings, in which:
FIG. 1 is a schematic side view of a transport motor vehicle with the multifunctional control system of the invention;
FIGS. 2 and 3 are schematic top and rear views of the vehicle of Fig. 1 respectively;
FIG. 4 is a schematic view of the interior of the cab of the vehicle of Fig. 1;
FIG. 5 is an image of the control terminal of the system of the invention showing a first page of the graphical interface;
FIG. 6 is a view of a functional diagram of the system of the invention;
FIGS. 7, 8 and 10 are further images of the control terminal of the system of the invention showing second, third and fourth pages of the graphic interface respectively;
FIG. 9 is a functional block diagram of the control method using the system of the invention.

### Detailed description of a preferred exemplary embodiment

Particularly referring to the figures, there is shown a control system to use with a tipper vehicle.

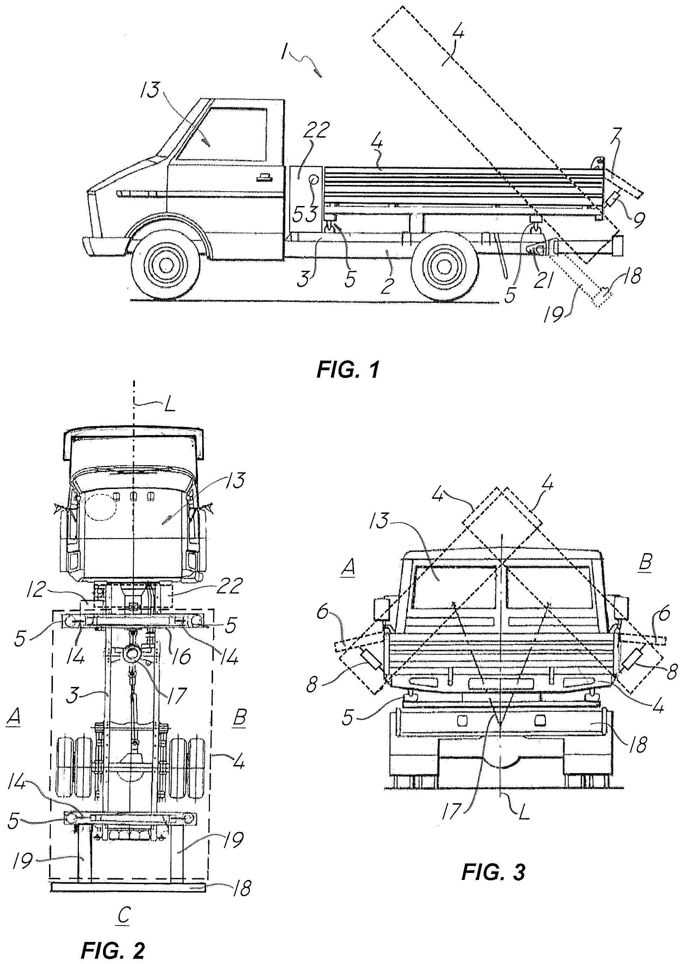

The vehicle, generally designated by numeral 1, essentially comprises a frame 2 and possibly a subframe 3 having a tipper body 4 connected thereto by means of a plurality of spherical supports 5, located proximate to the corners of the body 4, as shown in FIGS. 1 to 3.

The spherical supports 5 essentially comprise a concave member and a convex member, secured to the subframe 3 and the body 4 respectively and designed to be mutually and selectively coupled to allow the body 4 to be tipped on one side A or the other B with respect to the longitudinal axis L of the vehicle 1 and toward the back C of the latter.

In order to tipper the payload of the body 4, the latter has at least three openable walls, i.e. two side walls 6 and at least one rear wall 7. Each of the walls 6, 7 is controlled by a respective first actuator 8, 9, preferably but without limitation of hydraulic type.

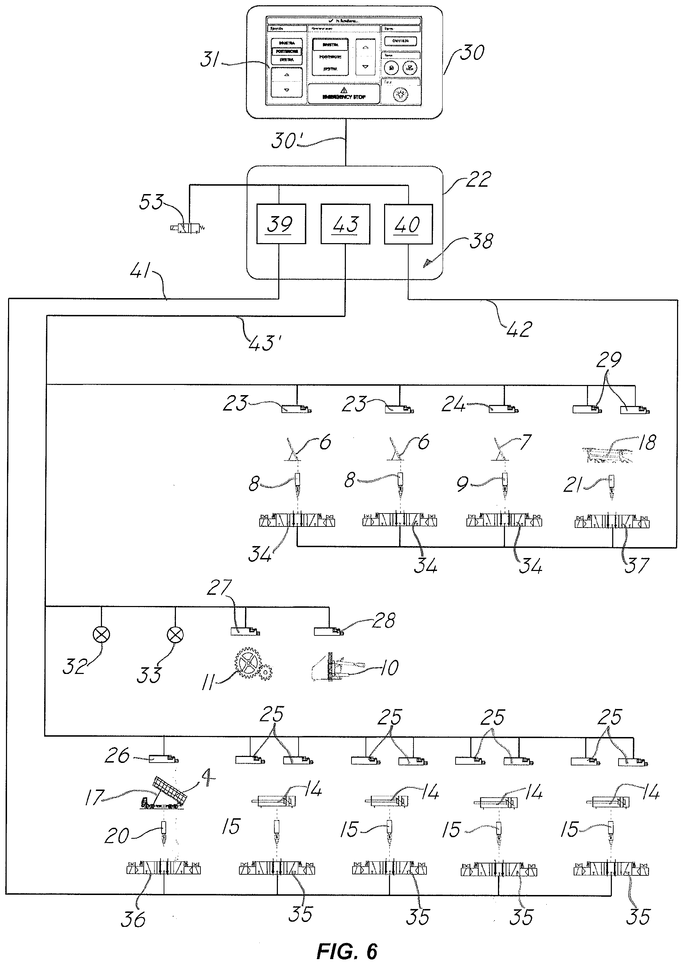

As shown in FIG. 6, the vehicle 1 comprises an emergency brake 10, directly acting on the wheels to ensure that the vehicle 1 will be stopped both during parking and while the body 4 is being tipped under certain conditions.

A power takeoff 11 is also provided, which is designed to take power from the engine and drive a hydraulic pump for feeding an oil-hydraulic circuit and/or a compressor 12 for feeding a pneumatic circuit, which are used to operate the various components of the vehicle 1.

Preferably the pump and/or the compressor 12 are mounted to the engine and are located under the cab 13 of the vehicle 1 for easy access for maintenance and servicing of their respective circuits.

For tipping control, each of the spherical supports 5 has a locking pin 14 associated therewith, which may be actuated by a second actuator 15, which is accommodated in a respective cross member 16 connected to the frame 3 of the vehicle 1.

The structure of the spherical supports 5, the locking pins 14 and the respective actuators 15 may be, for example but without limitation, as described and claimed in the international application WO2018/055565 by the applicant hereof.

The vehicle 1 is also equipped with a hydraulic tipping cylinder 17 having a lower end hinged to the frame 2 and the opposite end hinged to the body 4 by means of respective CV joints.

Finally, a rear underrun protection bar 18 is provided, which has two side arms 19 hinged to the frame 2 and pivots between a retracted and raised position, i.e. a "field" position, and an extended position and lowered position, i.e. a "driving" position.

The system also comprises a third actuator 20 for driving the cylinder 17, and a fourth actuator 21 for driving the underrun protection bar 18.

As shown in FIG. 6, the control system comprises a central control unit 22 adapted to be accessed by an operator, and a plurality of sensors associated with the aforementioned actuators to detect their limit-stop position. Preferably, the central control unit 22 may be placed proximate to the cab 13 at the frame 2 or the subframe 3.

In particular, the system comprises first sensors 23, 24 associated with the first actuators 8, 9 of the side 6 and rear 7 walls of the body 4, to detect the opening or closing state thereof.

Second sensors 25 are associated with the locking pins 14 of the spherical supports 5 and their respective second actuators 15, to detect their position with respect to the supports.

According to the invention, the third actuator 20, the power takeoff 11, the fourth actuator 21 and the emergency brake 10 have a plurality of third 26, 27, 28 and fourth 29 sensors associated therewith, namely one sensor 26 for detecting the position the lift cylinder 17 and/or the body 4, one sensor 27 associated with the engagement of the power takeoff 11 and one sensor 28 associated with the engagement of the brake 10.

Furthermore, fourth sensors 29 are configured to detect the position of the underrun protection bar 18 between the lowered "driving" position and the raised "field" position.

First sensors 23, 24, second sensors 25, third sensors 26, 27, 28 and fourth sensors 29 are all connected to the central control unit 22 via respective electrical connections.

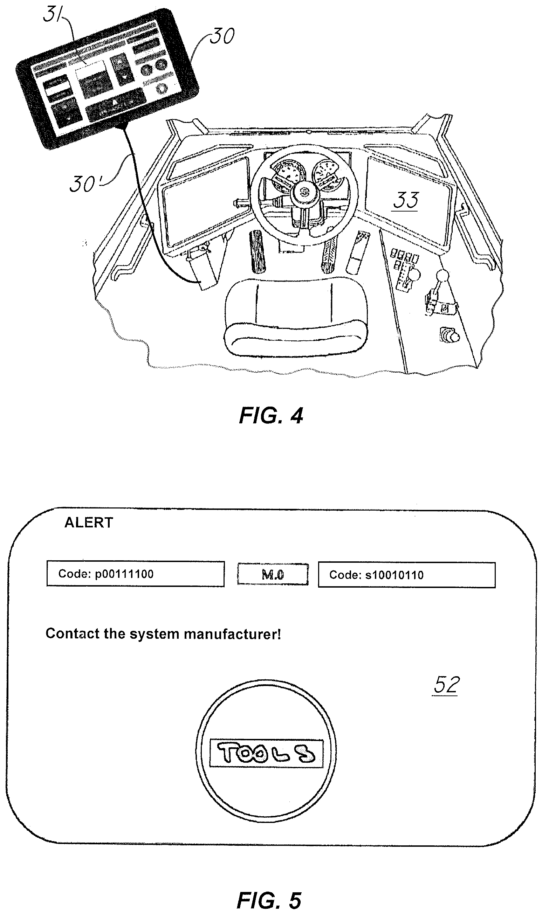

Advantageously, the control unit 22 is connected to a control terminal 30 which is adapted to be accessed by the operator, as shown in FIG. 4.

In a peculiar aspect of the invention, the control terminal 30 is an electronic device of the tablet type with a touch-operated graphical interface 31 that allows the operator to select the tasks of opening the walls 6, 7, tipping the body 4, positioning the bar 18 and detecting the engagement of the power takeoff 11 only if the latter has been enabled.

In a further peculiar aspect of the invention, the system comprises a speed limiter 32 and/or an acoustic or visual alert device 33, which are adapted to be automatically operated to reduce the rotation speed of the engine and/or warn the operator about anomalies and hazard conditions if the body 4 remains in the lifted state and at least one wall 6, 7 remains in the open position.

As is known per se, the speed limiter 32 is an electronic device that is designed to interact with the engine, in particular with its injection device, to reduce the flow of fuel into the combustion chambers and limit the rotation speed of the engine.

Furthermore, the acoustic and/or visual alert devices 33 may be provided to inform the operator of a possible hazard condition, a possible system malfunction condition and the need to check the position of the body 4 and the walls 6, 7 under the same operating conditions of the speed limiter 32.

Advantageously, all the sensors 23-29 and their respective actuators 8, 9, 15, 20, 21 are connected to the control unit 22 and are operable via the touch-operated graphical interface 31 of the control terminal 30.

In particular, the control terminal 30 is connected to the central control unit 22 via a cable 30' or wireless communication means for the touch-operated graphical interface 31 to report the position of the walls 6, 7, the position of the body 4 and the operating condition of the speed limiter 32.

Furthermore, appropriate software is installed on the control unit 22, which is programmed to automatically actuate the speed limiter 32 if the body 4 remains in the lifted state and at least one of the walls 6, 7 remains in the raised, i.e. open position.

Preferably, the central control unit 22 may be configured to control the actuation of the lift cylinder 17 only when the respective fourth sensor 29 of the underrun protection bar 18 detects the "field" position and the power takeoff 11 is engaged.

The software is also programmed to use the control terminal 30 to report additional functions of apparatus and accessories of the vehicle 1, such as a sunroof of the tipper body 4, a control camera, a swiveling headlight, cereal outlets, an electric warning triangle and a balance meter.

In a first preferred embodiment, as shown in the figures, the vehicle 1 comprises the compressor 12 for delivering pressurized air to the actuators 8, 9, 15, 20, 21 and the central control unit 22 has a series of electrically operated solenoid valves 34-37 connected to the compressor 12.

In particular, the control unit 22 has a series of first electrically operated valves 34 for supplying air to the first actuators 8, 9 of the side 6 and rear 7 walls and a series of second electrically operated valves 35 for supplying air to the second actuators 15 of the locking pins 14 of the spherical supports 5.

In this embodiment, the central control unit 22 further comprises a third electrically controlled valve 36 for supplying air to the third actuator 20 of the lift cylinder 17 and a fourth electrically controlled valve 37 for supplying air to the fourth actuator 21 of the underrun protection bar 18.

Alternatively, the actuators 8, 9, 15, 20, 21 may be of electro-hydraulic type and the central control unit 22 may be directly connected to the actuators 8, 9, 15, 20, 21.

The control unit 22 comprises a electronic part 38 therein, which is preferably composed of first 39 and second 40 relay boards connected via lines 41, 42 to the electrically operated valves 35, 36 and the electrically operated valves 34, 37, respectively and a sensor control board 43 connected via a line 43' to the sensors 23-29.

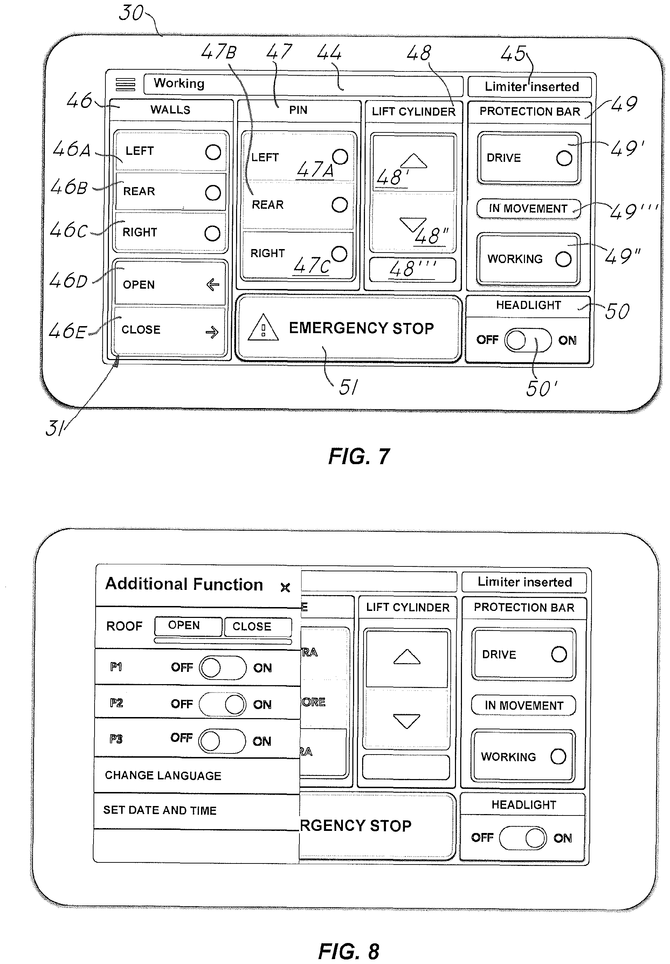

In a preferred embodiment, the graphical interface 31 on the tablet 30 as shown in FIG. 7 has at least one top bar divided into two areas containing a virtual button 44 for operation of the system and a virtual button 45 for engagement of the limiter 32.

The field under top bar is divided into four zones containing a first virtual button 46 for management of the walls 6, 7, a second virtual button 47 for management of the pins 14, a third virtual button 48 for management of the cylinder 17 and a fourth virtual button 49 for monitoring and management of the underrun protection bar 18.

The second virtual button 47 for management of the pins 14 can be operated by the operator only if the emergency brake 10 is engaged.

In particular, the first virtual button 46 for management of the walls 6, 7 contains three first virtual sub-buttons 46a, 46b, 46c for selecting the opening side A, B, C of the walls 6, 7, with respective red/green indicators and two second virtual sub-buttons 46d, 46e with respective up/down indicators for actuating the selected walls 6, 7.

The second virtual button 47 for management of the pins 14 contains three third virtual sub-buttons 47a, 47b, 47c for selection of the tipping side A, B, C of the body 4.

The third virtual button 48 for management of the cylinder 17 contains two fourth virtual sub-buttons 48', 48" for lifting and lowering the body 4 and an indicator light 48'" for indicating the position of the lift cylinder 17.

The fourth virtual button 49 contains two fifth virtual sub-buttons 49', 49", which are indicative of the "driving" position and the "field" position of the underrun protection bar 18.

The fourth virtual button 49 may be associated with indicators 49'" for indicating the position of the underrun protection bar 18.

The first virtual button 46 for management of the walls 6, 7, the third virtual button 48 for management of the cylinder 17 and the fourth virtual button 49 for monitoring and management of the underrun protection bar 18 may be operable by the operator only if the power takeoff 11 is engaged and are not bound by engaged/non-engaged state of the emergency brake 10.

Furthermore, the operator may operate on the virtual button 48 for management of the cylinder 17 only if the underrun protection bar 18 is in the "field" position.

Finally, a first virtual switch 50' is provided at the bottom of the graphical interface 31 for switching on/off an external light and a virtual sign 51 showing the caption "Emergency stop" to allow the system of the invention to be shut down in case of malfunction or hazard.

In operation, selection of the virtual operation button 40 will open a second page, as shown in FIG. 8 for actuation of additional functions, such as movement of the sunroof of the body 4 and other functions that can be freely envisaged by the body manufacturer, such as a camera, an electric warning triangle, a Swiss-type rear board, by suitable programming.

Finally, as shown in FIG. 5, a first emergency page 52 of the graphical interface 31 is show, which is accessed in case of malfunction of the inventive system.

In this first emergency page 52, the software provides a plurality of alphanumeric codes adapted to identify any specific anomaly reported by the software installed in the central control unit 22 and detected by the first sensors 23, 24, the second sensors 25, the third sensors 26, 27, 28 and the fourth sensors 29.

For example, codes beginning with the letter "P" may identify anomalies of the second sensors 25 associated with the locking pins 14 and codes beginning with the letter "S" may identify anomalies of the first 23, 24, third 26, 27, 28 and fourth 29 sensors, which may be used by the operator to provide guidance to the workshop to solve the problem.

If the anomaly is not solved, a mushroom button 53 on the control unit 22 may be still actuated, to empty the pneumatic circuit and allow the operator to manually solve the issue.

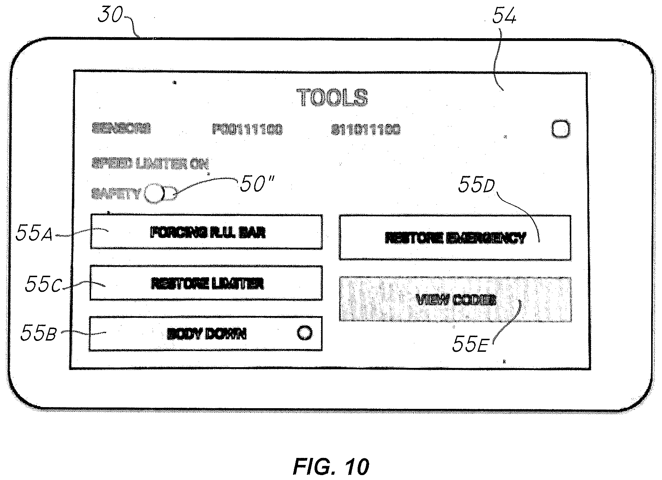

In this case, once the malfunction has been solved, the operator is allowed to access, via the graphical interface 31, a second emergency page 54, as shown in FIG. 10, to restore the system, possibly after removing a safety lock, solving the reported anomaly and forcing the operation of the system.

The second emergency page 54 contains a second virtual switch 50" for removing the safety lock and a series of fifths virtual buttons 55a, 55b, 55c for forcing the underrun protection bar 18, the cylinder 17, the speed limiter 32 and/or the acoustic or visual alert device 33 respectively.

As used hereinafter, the terms forcing and/or forcing the system will indicate a condition of partial recovery of the system to allow the operator to drive the vehicle 1 to a repair shop without anomalies preventing safe circulation and with the speed limiter 32 and/or of the acoustic or visual alert device 33 off.

Furthermore, the second emergency page 54 contains a fifth virtual button 55d to allow the operator to return to the home page, as shown in FIG. 7, and a fifth virtual button 55e for reading each access by the operator as recorded in the control terminal 30 to solve anomalies concerning the pins 14, the walls 6, 7, the bar 18 and the lift cylinder 17.

The control terminal 30 may thus comprise appropriate wireless connection devices to allow the repair shop to remotely control the multifunctional control system and to allow the operator to force the system.

These wireless connection devices may be automatically and/or manually actuated by the operator via the first 52 or second 54 emergency pages.

It will be appreciated that, with the configuration of the control terminal 30 and the graphical interface 31, the operator may easily and virtually instantaneously select all the main functions of the vehicle 1, and be informed of the actual conditions of the latter.

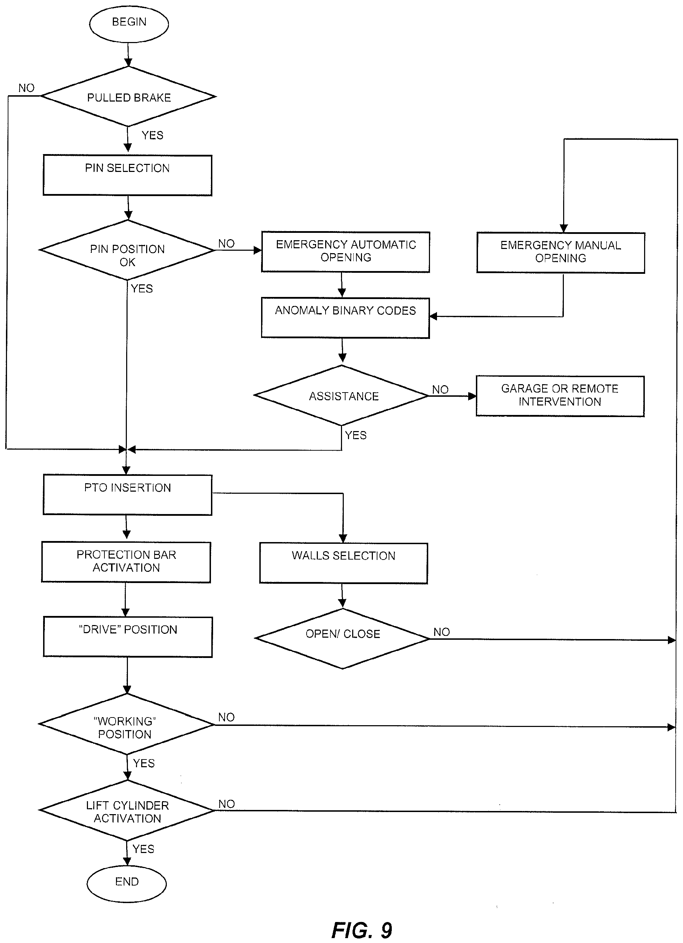

In a further aspect, the invention relates to a method of multifunctional control of a transport vehicle 1 having a tipper body 4 by means of the above described control system, as schematically shown in FIG. 9.

The method includes the steps of:
a) selecting a tipping side A, B, C for the body 4 and locking the selected pins 14;
b) selecting one or more walls 6, 7 along the tipping side A, B, C;
c) opening the selected walls 6, 7;
d) selecting the "field" position of the underrun protection bar 18 and then actuating the bar 18 to move it to the selected position;
e) actuating the lift cylinder 17 to tip the body 4.

The step of a) selecting the pins 14 is only allowed when the emergency brake 10 is actuated and the steps of c) opening the walls 6, 7 and d) actuating the bar 18 and e) actuating the cylinder 17 are only allowed when the power takeoff 11 is engaged.

In addition, the speed limiter 32 and/or the acoustic alert device 33 are automatically switched on when the control terminal 30 reports that at least one wall 6, 7 is open, are automatically switched off when all the walls 6, 7 are in the closed position and are always disabled when the bar 18 is in the "field" position.

When the brake 10 is engaged and the body 4 is not completely lowered, the control terminal 30 does not show the indication that the pins 14 are on.

Furthermore, in case of malfunction of at least one of the pins 14, the first emergency page 52 appears automatically on the graphical interface 31 of the control terminal 30 to inform the operator of this anomaly.

In particular, if the emergency mushroom button 53 is actuated, the compressed air system will be automatically emptied. Furthermore, once the anomaly has been solved, the operator is allowed to manually access the second emergency page 54 of the graphical interface 31 of the control terminal 30 as described above.

### Operating states of the multifunctional control system

The operating states of the multifunctional control system, in particular of the control terminal 30 and the elements that compose the vehicle 1, are as follows.

In the idle state:
- the control terminal 30 is on and partially operational;
- the operator can actuate the first virtual switch 50' to switch on/off the external light, the virtual signal 51 "Emergency stop" and the virtual operation button 40 for actuation of additional functions, such as movement of the sunroof of the body 4 and other free functions;
- the operator cannot actuate the first virtual button 46 for management of the walls 6, 7, the second virtual button 47 for management of the pins 14, the third virtual button 48 for management of the cylinder 17 and the fourth virtual button 49 for monitoring and management of the underrun protection bar 18.

In the idle state, the virtual buttons 46, 47, 48, 49 that cannot be actuated by the operator are off and the indicator lights 48‴ for indicating the operation of the lift cylinder 17 and the red/green indicators for indicating the opening side A, B, C of the walls 6, 7 are on.

In the operating state with the emergency brake 10 engaged and the power takeoff 11 not engaged:
- the control terminal 30 is partially operational and indicates the engaged state of the emergency brake 10 and the unengaged state of the power takeoff 11;
- the red/green lights and the indicator 48‴ are on and the operator can actuate the above described virtual switches 50, 51, 46, 47 in the idle state.

In the operating state with the emergency brake 10 unengaged and the power takeoff 11 engaged:
- the control terminal 30 is partially operational and indicates the engaged state of the power takeoff 11 and the unengaged state of the emergency brake 10;
- the operator can actuate the first virtual button 46 for management of the walls 6, 7 and the fourth virtual button 49 for monitoring and managing of the underrun protection bar 18;
- the operator cannot actuate the second virtual button 47 for management of the pins 14 and the third virtual button 48 for management of the cylinder 17.

In the operating state with the emergency brake 10 unengaged, the power takeoff 11 engaged and the underrun protection bar 18 in the driving position:
- the control terminal 30 is partially operational and indicates the engaged state of the power takeoff 11, the driving position of the underrun protection bar 18, and the unengaged state of the emergency brake 10;
- the operator can actuate the first virtual button 46 for management of the walls 6, 7 and the fourth virtual button 49 for monitoring and managing of the underrun protection bar 18;
- the operator cannot actuate the second virtual button 47 for management of the pins 14 and the third virtual button 48 for management of the cylinder 17.

In the operating state with the emergency brake 10 unengaged, the power takeoff 11 engaged and the underrun protection bar 18 in the "field" position:
- the control terminal 30 is partially operational and indicates the engaged state of the power takeoff 11, the "field" position of the underrun protection bar 18, and the unengaged state of the emergency brake 10;
- the operator can actuate the first virtual button 46 for management of the walls 6, 7, the third virtual button 48 for management of the cylinder 17 and the fourth virtual button 49 for monitoring and management of the underrun protection bar 18;
- the operator cannot actuate the second virtual button 47 for management of the pins 14.

In the operating state with the emergency brake 10 and the power takeoff 11 unengaged and the underrun protection bar 18 in the "driving" position:
- the control terminal 30 is partially operational and indicates the engaged state of the power takeoff 11, the engaged state of the emergency brake 10 and the "driving" position of the underrun protection bar 18;
- the operator can actuate the first virtual button 46 for management of the walls 6, 7, the second virtual button 47 for management of the pins 14 and the fourth virtual button 49 for monitoring and management of the underrun protection bar 18;
- the operator cannot actuate the third virtual button 48 for management of the cylinder 17.

In the operating state with the emergency brake 10 and the power takeoff 11 engaged and the underrun protection bar 18 in the "field" position:
- the control terminal 30 is fully operational and indicates the engaged state of the power takeoff 11, the engaged state of the emergency brake 10 and the "field" position of the underrun protection bar 18;
- the operator can actuate the first virtual button 46 for management of the walls 6, 7, the second virtual button 47 for management of the pins 14, the third virtual button 48 for management of the cylinder 17 and the fourth virtual button 49 for monitoring and management of the underrun protection bar 18.

In the emergency state caused by a problem with the locking pins 14 and their respective second actuators 15 via their respective second sensors 25:
- the control terminal 30 indicates the emergency state, the graphical interface 31 automatically displays the first emergency page 52 and the software provides a plurality of alphanumeric codes to identify the anomaly of the locking pins 14;
- the operator can actuate no button;
- the operator can actuate the emergency mushroom button 53 to empty the pneumatic circuit and manually unlock the pins 14 to ensure safety of the vehicle 1.

In the emergency state caused by a problem with the first actuators 8, 9 of the walls 6, 7, the third actuator 20 of the cylinder and the fourth actuator 21 of the underrun protection bar 18, the operator is allowed to manually access the second emergency page 54 via the virtual signal 51 showing the caption "Emergency stop" to shut down the system and act on each button of the interface 31 to switch on/off, for example, the speed limiter 32 or force the position of the underrun protection bar 18.

It will be appreciated from the foregoing that the control system and method for a tipper vehicle fulfill the intended objects and can particularly control and monitor the operation of the various components that are designed to cause the tipper body to be tipped under safe conditions and in compliance with relevant national and international standards.

While the system has been described with particular reference to the accompanying figures, the numerals referred to in the disclosure and claims are only used for the sake of a better intelligibility of the invention and shall not be intended to limit the claimed scope in any manner.

Reference herein to "one embodiment" or "the embodiment" or "some embodiments" indicates that a particular characteristic, structure or member that is being described is included in at least one embodiment of the inventive subject matter.

Furthermore, the particular characteristics, structures or members may be combined together in any suitable manner to provide one or more embodiments.

### Industrial Applicability

The present invention may find application in industry, because it can be produced on an industrial scale in factories operating in the field of vehicle safety, particularly for trucks.

## Claims

1. A multifunctional control system in combination thereof with a transport vehicle (1) of the type comprising a frame (2), a subframe (3), a tipper body (4) having a plurality of walls (6, 7) and connected to the subframe (3) via a plurality of spherical supports (5) that are designed to be selectively locked by pins (14), a lift cylinder (17) for lifting the body (4), an emergency brake (10), a power takeoff (11) and an underrun protection bar (18), said control system comprising a plurality of first, second, third and fourth sensors (23-29), for detecting the position of the walls (6, 7), the position of the pins (14), the position of the cylinder (17), the actuation of the brake (10), the engagement of the power takeoff (11) and the position of the bar (18) respectively, a central control unit (22) with said sensors (23-29) operably connected thereto, a control terminal (30) connected to said control unit (22) and designed to be actuated by an operator, **characterized in that** said control terminal (30) is an electronic device of the tablet type with a touch-operated graphical interface (31), configured to select the tasks of opening the walls (6, 7), tipping the body (4) and positioning the bar (18) only if the power takeoff (11) is engaged, and further **characterized in that** it comprises a speed limiter (32) and/or an acoustic or visual alert device (33) which are configured to be automatically operated to reduce the rotation speed of the engine and/or warn the operator about anomalies and hazard conditions if the body (4) remains in the lifted state and at least one wall (6, 7) remains in the open position.

2. System as claimed in claim 1, **characterized in that** said acoustic or visual alert device (33) is adapted to warn the operator about a hazard condition and the need to check the position of the body (4) and the walls (6, 7) under the same operating conditions of said speed limiter (32).

3. System as claimed in claim 1 or 2, **characterized in that** said tablet (30) is connected to said central control unit (22) via a cable (30') or wireless communication means.

4. System as claimed in claim 1 or 2, **characterized in that** it comprises a plurality of first (8, 9) and second (15) actuators, respectively associated with said first sensors (23, 24) for driving the walls (6, 7) of the body (4) and with said second sensors (25) for actuating said pins (14).

5. System as claimed in claim 4, **characterized in that** it comprises a third actuator (20) for driving the cylinder (17), said third sensors (26, 27, 28) and said fourth sensors (29) being designed to respectively detect the position of the cylinder (17), the engagement of the power takeoff (11) and the engagement of the emergency brake (10).

6. System as claimed in claim 5, **characterized in that** it comprises fourth actuators (21) associated with said fourth sensors (29) for actuating said underrun protection bar (18), said fourth sensors (29) being configured to detecting the position of said bar (18) between a raised "driving" position and a lifted "field" position.

7. System as claimed in claim 5, **characterized in that** said control unit (22) is configured to control the actuation of said lift cylinder (17) only when the said fourth sensor (29) of the underrun protection bar (18) detects the field position and when the power takeoff (11) is engaged.

8. System as claimed in claim 1, **characterized in that** an appropriate software is installed on said control unit (22) to control by means of said tablet (30) additional functions of apparatus and accessories of the vehicle, such as a sunroof of the tipper body (4), a control camera, a swiveling headlight, cereal outlets, an electric warning triangle and a balancer.

9. A method of multifunctional control of a transport vehicle (1) having a tipper body (4) via a control system according to one or more of the preceding claims, comprising the operating steps of:
a) selecting a tipping side (A, B, C) and locking the selected pins (14);
b) selecting one or more walls (6, 7) along the tipping side (A, B, C);
c) opening the selected walls (6, 7);
d) selecting the "field" position of the bar (18) and then actuating the bar (18) to move it to the selected position;
e) actuating the lift cylinder (17) to cause tipping;
wherein said step of a) selecting the pins (14) is only allowed when the emergency brake is engaged (10);
wherein said steps of c) opening the walls (6, 7) and d) actuating the bar (18) and e) actuating the cylinder (17) are only allowed when the power takeoff (11) is engaged;
wherein the speed limiter (32) and/or the acoustic or visual alert device (33) are automatically switched on when at least one of the walls (6, 7) are open and is automatically switched off when all the walls (6, 7) are closed; and
wherein the speed limiter (32) and/or the acoustic or visual alert device (33) are always disabled when the bar (18) is in the "field" position.

10. Control method according to claim 9 wherein, when the brake (10) is engaged and the body (4) is not completely lowered, the graphical interface (31) does not display the indication that the pins (14) are on.

11. Control method according to claim 10, wherein in case of malfunction of at least one of the pins (14) on the control terminal (30) an emergency signal is automatically displayed on the control terminal (30).

12. Control method according to claim 11, wherein in a first emergency page (52), each specific anomaly detected by the first, second, third and fourth sensors (23-29) is identified with corresponding alphanumeric codes which allow the operator to provide guidance to the repair shop about the anomaly.

13. Control method according to claim 10, wherein in case of malfunction of the pins (14), by actuating an emergency mushroom button (53) the circuit that supplies the pins (14) is emptied.

14. Control method according to claim 12, wherein once the anomaly with the pins (14) has been solved, the operator is allowed to access a second emergency page (54) via the graphical interface (31) to restore the system after removing a safety lock.

15. Control method according to claim 14, wherein said second emergency page (54) contains a button for reading each access by the operator recorded in the control terminal (30) to solve anomalies concerning the pins (14), the walls (6, 7), the bar (18) and the lift cylinder (17).

## Patentansprüche

1. Multifunktionales Steuerungssystem in Kombination mit einem Transportfahrzeug (1) des Typs umfassend einen Rahmen (2), ein Untergestell (3), einen Kipperaufbau (4) mit mehreren Wänden (6, 7) verbunden mit dem Untergestell (3) über mehrere kugelförmige Unterstützungen (5), die so konstruiert sind, dass sie durch Stifte (14) selektiv verriegelt werden können, einen Hubzylinder (17) zum Anheben des Kipperaufbaus (4), eine Notbremse (10), einen Nebenantrieb (11) und eine Unterfahrschutzleiste (18), wobei das Steuersystem eine Vielzahl von ersten, zweiten, dritten und vierten Sensoren (23-29) umfasst, um die Position der Wände (6, 7), die Position der Stifte (14), die Position des Zylinders (17), die Betätigung der Bremse (10), der Einkupplung des Nebenabtriebs (11) und die Position der Stange (18) zu erfassen, eine zentrale Steuereinheit (22) wobei die Sensoren (23-29) damit betriebsmäßig verbunden sind, ein Steuerterminal (30), das mit der Steuereinheit (22) verbunden und zur Betätigung durch eine Bedienperson ausgelegt ist, **dadurch gekennzeichnet, dass** das Steuerterminal (30) ein elektronisches Gerät vom Tablet-Typ mit einer berührungsgesteuerten grafischen Schnittstelle (31) ist, die konfiguriert ist, um die Aufgaben des Öffnens der Wände (6, 7), des Kippens des Kipperaufbaus (4) und der Positionierung der Stange (18) nur bei eingekuppeltem Nebenantrieb (11) auszuwählen; und weiter **dadurch gekennzeichnet, dass** er einen Geschwindigkeitsbegrenzer (32) und/oder eine akustische oder optische Warneinrichtung (33) umfasst, die so konfiguriert sind, dass sie automatisch betätigt werden, um die Drehzahl des Motors zu reduzieren und/oder den Bediener vor Anomalien und Gefahrenzuständen zu warnen, wenn der Kipperaufbau (4) im angehobenen Zustand bleibt und mindestens eine Wand (6, 7) in geöffneter Stellung verbleibt.

2. System nach Anspruch 1, **dadurch gekennzeichnet, dass** die optische Warneinrichtung (33) dazu ausgelegt ist, den Bediener vor einem Gefahrenzustand und der Notwendigkeit zu warnen, die Position der Kipperaufbau (4) und der Wände (6, 7) unter den gleichen Betriebsbedingungen des Geschwindigkeitsbegrenzers (32) zu überprüfen.

3. System nach Anspruch 1 oder 2, **dadurch gekennzeichnet, dass** das Tablet (30) über ein Kabel (30') oder ein drahtloses Kommunikationsmittel mit der zentralen Steuereinheit (22) verbunden ist.

4. System nach Anspruch 1 oder 2, **dadurch gekennzeichnet, dass** es mehrere erste (8, 9) und zweite (15) Aktuatoren umfasst, die jeweils mit den ersten Sensoren (23, 24) zum Antreiben der Wände (6, 7) der Kipperaufbau (4) und mit den zweiten Sensoren (25) zum Betätigen der Stifte (14) zugeordnet sind.

5. System nach Anspruch 4, **dadurch gekennzeichnet, dass** es einen dritten Aktuator (20) zum Antreiben des Zylinders (17) umfasst, wobei die dritten Sensoren (26, 27, 28) und die vierten Sensoren (29) dazu bestimmt sind, jeweils die Position des Zylinders (17), das Einsetzen des Nebenabtriebs (11) und das Einsetzen der Notbremse (10) zu erfassen.

6. System nach Anspruch 5, **dadurch gekennzeichnet, dass** es vierte Aktuatoren (21) umfasst, die den vierten Sensoren (29) zum Betätigen der Unterfahrschutzleiste (18) zugeordnet sind, wobei die vierten Sensoren (29) konfiguriert sind, um die Position der Unterfahrschutzleiste (18) zwischen einer angehobenen "Fahr"-Position und einer angehobenen "Feld"-Position zu erfassen.

7. System nach Anspruch 5, **dadurch gekennzeichnet, dass** die Steuereinheit (22) konfiguriert ist, die Betätigung des Hubzylinders (17) nur dann zu steuern, wenn der vierte Sensor (29) der Unterfahrschutzleiste (18) die Feldposition erfasst und wenn der Nebenantrieb (11) eingekuppelt ist.

8. System nach Anspruch 1, **dadurch gekennzeichnet, dass** auf der Steuereinheit (22) eine geeignete Software installiert ist, um mit Hilfe des Tablets (30) zusätzliche Funktionen von Geräten und Zubehörteilen des Fahrzeugs zu steuern, wie beispielsweise ein Schiebedach des Kipperaufbaus (4), eine Kontrollkamera, ein schwenkbarer Scheinwerfer, Getreideauslässe, ein elektrisches Warndreieck und ein Balancer.

9. Verfahren zur multifunktionalen Steuerung eines Transportfahrzeugs (1) mit einem Kipperaufbau (4) über ein Steuersystem nach einem oder mehreren der vorhergehenden Ansprüche, umfassend die Betriebsschritte:
a) Auswählen einer Kippseite (A, B, C) und Verriegeln der ausgewählten Stifte (14);
b) Auswählen einer oder mehrerer Wände (6, 7) entlang der Kippseite (A, B, C);
c) Öffnen der ausgewählten Wände (6, 7);
d) Auswählen der "Feld"-Position der Unterfahrschutzleiste (18) und dann Betätigen der Unterfahrschutzleiste (18), um sie in die ausgewählte Position zu bewegen;
e) Betätigen des Hubzylinders (17), um ein Kippen zu bewirken;
wobei der Schritt des a) Auswählens der Stifte (14) nur erlaubt ist, wenn die Notbremse (10) eingesetzt ist;
wobei die Schritte c) Öffnen der Wände (6, 7) und d) Betätigen der Unterfahrschutzleiste (18) und e) Betätigen des Zylinders (17) nur erlaubt sind, wenn der Nebenabtrieb (11) eingekuppelt ist;
wobei der Geschwindigkeitsbegrenzer (32) und/oder die akustische oder optische Warneinrichtung (33) automatisch eingeschaltet werden, wenn mindestens eine der Wände (6, 7) geöffnet ist, und automatisch ausgeschaltet werden, wenn alle Wände (6, 7) sind zu; und wobei der Geschwindigkeitsbegrenzer (32) und/oder die akustische oder visuelle Warnvorrichtung (33) immer deaktiviert sind, wenn sich die Unterfahrschutzleiste (18) in der "Feld"-Position befindet.

10. Steuerverfahren nach Anspruch 9, wobei, wenn die Notbremse (10) eingesetzt ist und der Kipperaufbau (4) nicht vollständig abgesenkt ist, die grafische Schnittstelle (31) die Anzeige nicht zeigt, dass die Stifte (14) verriegelt sind.

11. Steuerverfahren nach Anspruch 10, wobei bei einer Fehlfunktion mindestens eines der Stifte (14) automatisch ein Notsignal am Steuerterminal (30) angezeigt wird.

12. Steuerverfahren nach Anspruch 11, wobei in einer ersten Notfallseite (52) jede spezifische Anomalie, die durch den ersten, zweiten, dritten und vierten Sensoren (23-29) erkannt wird, mit entsprechenden alphanumerischen Codes identifiziert wird, die es dem Bediener ermöglichen, Anleitung zu die Werkstatt über die Anomalie zu geben.

13. Steuerverfahren nach Anspruch 10, wobei bei einer Fehlfunktion der Stifte (14), der die Stifte (14) versorgende Stromkreis durch Betätigen eines pilzförmigen Not-Knopfes (53) wird geleert.

14. Steuerverfahren nach Anspruch 12, wobei, sobald die Anomalie mit den Stiften (14) behoben wurde, der Bediener über die grafische Schnittstelle (31) auf eine zweite Notfallseite (54) zugreifen kann, um das System nach Entfernen einer Sicherheitssperre wiederherzustellen .

15. Steuerverfahren nach Anspruch 14, wobei die zweite Notfallseite (54) einen Knopf zum Lesen jedes Zugriffs durch den Bediener enthält, der im Steuerterminal (30) aufgezeichnet ist, um Anomalien bezüglich der Stifte (14), der Wände (6, 7), der Unterfahrschutzleiste (18) und des Hubzylinders (17) zu lösen.

## Revendications

1. Système de commande multifonctionnel en combinaison avec un véhicule de transport (1) du type comprenant un châssis (2), un sous-châssis (3), une benne basculante (4) ayant une pluralité de parois (6, 7) et reliées au sous-châssis (3) via une pluralité de supports sphériques (5) qui sont conçus pour être bloqués sélectivement par des goupilles (14), un vérin de levage (17) pour soulever la benne basculante (4), un frein d'urgence (10), une prise de force (11) et une barre anti-encastrement (18), ledit système de commande comprenant une pluralité de premier, deuxième, troisième et quatrième capteurs (23-29), pour détecter la position des parois (6, 7), la position des goupilles (14), la position du vérin (17), l'actionnement du frein (10), l'engagement de la prise de force (11) et la position de la barre anti-encastrement (18) respectivement, une unité centrale de commande (22) avec lesdits capteurs (23-29) fonctionnellement connectés à celui-ci, un terminal de commande (30) connecté à ladite unité de commande (22) et conçu pour être actionné par un opérateur, **caractérisé en ce que** ledit terminal de commande (30) est un dispositif électronique de type tablette à interface graphique tactile (31), configuré pour sélectionner les tâches d'ouverture des parois (6, 7), de basculement de la benne basculante (4) et de positionnement de la barre (18) uniquement si la prise de force (11) est engagée, et **caractérisé en outre en ce qu'**il comprend un limiteur de vitesse (32) et/ou un dispositif d'alerte acoustique ou visuel (33) qui sont configurés pour être actionnés automatiquement pour réduire la vitesse de rotation du moteur et/ou avertir l'opérateur des anomalies et des conditions de danger si la benne basculante (4) reste à l'état soulevé et qu'au moins une paroi (6, 7) reste en position ouverte.

2. Système selon la revendication 1, **caractérisé en ce que** ledit dispositif d'alerte acoustique ou visuel (33) est adapté pour avertir l'opérateur d'une situation dangereuse et de la nécessité de vérifier la position de la benne basculante (4) et des parois (6, 7) dans les mêmes conditions de fonctionnement dudit limiteur de vitesse (32).

3. Système selon la revendication 1 ou 2, **caractérisé en ce que** ladite tablette (30) est connectée à ladite unité centrale de commande (22) via un câble (30') ou des moyens de communication sans fil.

4. Système selon la revendication 1 ou 2, **caractérisé en ce qu'**il comprend une pluralité de premier (8, 9) et deuxième (15) actionneurs, respectivement associés auxdits premiers capteurs (23, 24) pour entraîner les parois (6, 7) de la benne basculante (4) et avec lesdits seconds capteurs (25) pour actionner lesdites goupilles (14).

5. Système selon la revendication 4, **caractérisé en ce qu'**il comprend un troisième actionneur (20) pour entraîner le vérin (17), lesdits troisièmes capteurs (26, 27, 28) et lesdits quatrièmes capteurs (29) étant agencés pour détecter respectivement la position du cylindre (17), l'engagement de la prise de force (11) et l'engagement du frein d'urgence (10).

6. Système selon la revendication 5, **caractérisé en ce qu'**il comprend des quatrièmes actionneurs (21) associés auxdits quatrièmes capteurs (29) pour actionner ladite barre anti-encastrement (18), lesdits quatrièmes capteurs (29) étant configurés pour détecter la position de ladite barre (18) entre une position «conduite» relevée et une position relevée «champ».

7. Système selon la revendication 5, **caractérisé en ce que** ladite unité de commande (22) est configurée pour commander l'actionnement dudit vérin de levage (17) uniquement lorsque ledit quatrième capteur (29) de la barre de protection anti-encastrement (18) détecte la position du «champ» et lorsque la prise de force (11) est engagée.

8. Système selon la revendication 1, **caractérisé en ce qu'**un logiciel approprié est installé sur ladite unité de commande (22) pour contrôler au moyen de ladite tablette (30) des fonctions supplémentaires d'appareils et accessoires du véhicule, tels qu'un toit ouvrant de la benne basculante (4), une caméra de contrôle, un phare orientable, des sorties céréales, un triangle de présignalisation électrique et un balancier.

9. Procédé de commande multifonctionnelle d'un véhicule de transport (1) ayant une benne basculante (4) via un système de commande selon une ou plusieurs des revendications précédentes, comprenant les étapes de fonctionnement consistant à :
a) sélectionner un côté de basculement (A, B, C) et verrouiller les goupilles sélectionnées (14) ;
b) sélectionner une ou plusieurs parois (6, 7) le long du côté de basculement (A, B, C) ;
c) ouvrir les parois sélectionnées (6, 7);
d) sélectionner la position «champ» de la barre (18) puis actionner la barre (18) pour la déplacer vers la position sélectionnée ;
e) actionner le vérin de levage (17) pour provoquer le basculement;
dans lequel ladite étape a) de sélection des broches (14) n'est autorisée que lorsque le frein d'urgence est engagé (10);
dans lequel lesdites étapes c) de ouverture des parois (6, 7) et d) actionnement de la barre (18) et e) actionnement du vérin (17) ne sont autorisées que lorsque la prise de force (11) est engagée;
dans lequel le limiteur de vitesse (32) et/ou le dispositif d'alerte sonore ou visuelle (33) s'allument automatiquement lorsqu'au moins une des parois (6, 7) est ouverte et s'éteignent automatiquement lorsque toutes les parois (6, 7) sont fermés; et
dans lequel le limiteur de vitesse (32) et/ou le dispositif d'alerte sonore ou visuelle (33) sont toujours désactivés lorsque la barre (18) est en position «champ»

10. Procédé de commande selon la revendication 9 dans lequel, lorsque le frein (10) est engagé et benne basculante (4) n'est pas complètement abaissée, l'interface graphique (31) n'affiche pas l'indication que les goupilles (14) sont verrouillées.

11. Procédé de commande selon la revendication 10, dans lequel en cas de dysfonctionnement d'au moins une des goupilles (14) un signal d'urgence est automatiquement affiché sur le terminal de commande (30).

12. Procédé de commande selon la revendication 11, dans lequel dans une première page d'urgence (52), chaque anomalie spécifique détectée par les premier, deuxième, troisième et quatrième capteurs (23-29) est identifiée avec des codes alphanumériques correspondants qui permettent à l'opérateur de fournir instruction à l'atelier de réparation de l'anomalie.

13. Procédé de commande selon la revendication 10, dans lequel en cas de dysfonctionnement des goupilles (14), par actionnement d'un bouton d'urgence en forme de champignon (53) le circuit qui alimente les broches (14) est vidé.

14. Procédé de commande selon la revendication 12, dans lequel une fois l'anomalie avec les goupilles est (14) résolue, l'opérateur est autorisé à accéder à une deuxième page d'urgence (54) via l'interface graphique (31) pour restaurer le système après avoir retiré un verrou de sécurité.

15. Procédé de contrôle selon la revendication 14, dans lequel ladite deuxième page d'urgence (54) contient un bouton de lecture de chaque accès de l'opérateur enregistré dans le terminal de contrôle (30) pour résoudre des anomalies concernant les goupilles (14), les parois (6, 7), la barre (18) et le vérin de levage (17).
